# EUROPEAN PATENT APPLICATION

(11) **EP 1 202 430 A1**
(43) Date of publication of application: **02.05.2002**
(21) Application number: 01124545.3
(22) Date of filing: 12.10.2001
(51) Int. Cl.: H02K 1/14, H02K 21/14, H02K 5/15

(54) **Brushless motor**

(30) Priority: 30.10.2000 JP 2000329742
(71) Applicant: MATSUSHITA ELECTRIC INDUSTRIAL CO., LTD., Kadoma-shi, Osaka 571-8501 (JP)
(72) Inventor: Kinashi, Yoshikazu, Kobe-shi, Hyogo 651-1514 (JP); Yamamoto, Toshio, Moriguchi-shi, Osaka 570-0014 (JP); Sadanaga, Yuichiro, Katano-shi, Osaka 576-0021 (JP)
(74) Representative: Grünecker, Kinkeldey, Stockmair & Schwanhäusser Anwaltssozietät

(57) **Abstract**

To provide a brushless motor which can be miniaturized, and achieve better magnetic efficiency and produce higher torque output than a coreless motor. The brushless motor is characterized in that stators (5a, 5b) are formed into flat shapes, in which ends of teeth (8a to 8c) of the stators (5a, 5b) are formed into arc surfaces along a rim of a rotor (1) and teeth-winding parts (9) are formed in parallel with each other.

## Description

### Field of the Invention

The present invention relates to a brushless motor.

### Background of the Invention

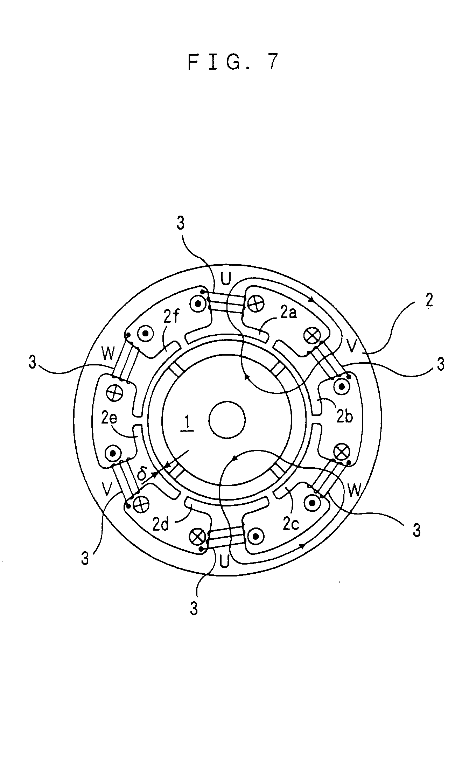

As shown in FIG. 7, a conventional brushless motor has a rotor 1 disposed at the center and a ring-shaped stator 2 surrounding the rotor 1. The rotor 1 is magnetized to have a plurality of polarities in a circumferential direction. Coils 3 are wound around teeth 2a to 2f of the stator 2, and the ends of the teeth 2a to 2f are disposed close to the rim of the rotor 1 with a gap δ.

FIG. 7 shows the case of three phases (UVW). The position of the rotor 1 is detected by a separate sensor (not shown), and timings of energizing the coils 3 of phases UVW are controlled according to a position of the rotor 1 to generate a rotating magnetic field from the stator 2. Thus, the rotor 1 is driven rotatively.

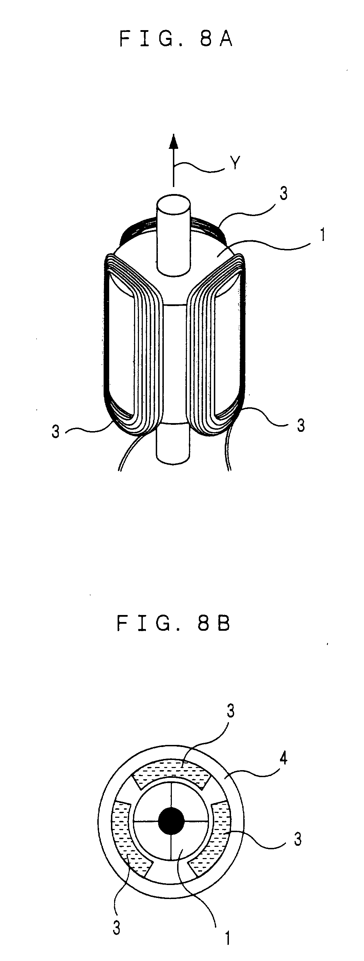

Further, conventionally, when a smaller version is necessary, a coreless motor has been provided in which air-core coils 3 are disposed around the rotor 1 as shown in FIGS. 8A and 8B, a stator yoke 4 is disposed around the coils 3, and a rotating magnetic field is generated in the same manner as FIG. 7 to rotatively drive the rotor 1.

However, although the above coreless motor can be miniaturized as compared with the typical brushless motor shown in FIG. 7, its magnetic efficiency is poor because the motor is coreless. Hence, high torque output cannot be realized. Further, under current circumstances, even when slightly higher torque is demanded, a degree of freedom on design is low except that the rotor 1 and the coils 3 can increase in length in an axial direction (Y axis direction) of the rotor 1.

The object of the present invention is to provide a brushless motor which is smaller than the brushless motor of FIG. 7, has higher magnetic efficiency than the coreless motor, and achieves high torque output.

### Disclosure of the Invention

The brushless motor of the present invention including a rotor which is rotatively supported in an axial direction and is magnetized to have a plurality of polarities in a circumferential direction, and stators composed of teeth which are wound with coils in teeth-winding parts thereof and which have front ends respectively facing the circumference of the rotor, the rotor rotating according to a rotating magnetic field of the stators, characterized in that the front ends of the teeth of the stators are formed into arc surfaces along the rim of the rotor and the teeth-winding parts are formed in parallel with each other.

Further, the brushless motor of the present invention is characterized in that the stators are formed such that the arc surfaces of the front ends of the teeth, which are opposed to the rim of the rotor, have slot pitches which are symmetrical each other with respect to the axial direction Y of the rotor.

Also, the brushless motor of the present invention is characterized in that the stators have a thickness in the axial direction Y of the rotor, and end faces of the rotor are formed such that a second length in a direction Z is longer than a first direction in a direction X, the direction Z connecting a 90° point and a 270° point, the direction X connecting a 0° point and a 180° point.

Besides, the brushless motor of the present invention is characterized in that the flat stators are each composed of a first stator block and a second stator block that make contact with each other at boundary parts in the direction X connecting the 0° point and the 180° point.

Additionally, the brushless motor of the present invention is characterized in that each of the first and second stator blocks is composed of a plurality of teeth blocks which are joined together to form a magnetic path at base end parts of the teeth-winding parts.

Furthermore, the brushless motor of the present invention is characterized in that the flat stator is composed of a single stator block.

Moreover, the brushless motor of the present invention is characterized in that the flat stators are formed such that trenches serving as the teeth-winding parts are formed along the thickness direction Y on side faces intersecting normally to the first length direction X, and an outermost peripheral surface of the coil wound around in the trenches is flush with the side face or sunk from the side face.

As described above, according to the brushless motor of the present invention, the front ends of the teeth of the stators are formed into arc surfaces along the rim of the rotor, and the teeth-winding parts are formed in parallel with each other. Hence, the brushless motor can be smaller in size as compared with the conventional brushless motor shown in FIG. 7, in which the ring-shaped stator surrounds the rotor. In addition, the present invention can achieve better magnetic efficiency and produce higher torque output than a coreless motor.

### Brief Description of the Drawings

FIG. 1 is an exploded perspective view showing a mechanism of a brushless motor according to Embodiment 1 of the present invention;
FIG. 2 is a perspective view showing an assembled state of Embodiment 1;
FIG. 3 is an enlarged sectional view showing Embodiment 1;
FIG. 4 is an enlarged sectional view showing a specific configuration example of Embodiment 1;
FIG. 5 is a perspective view showing a stator of a brushless motor according to Embodiment 2 of the present invention;
FIG. 6A and FIG. 6B are, respectively, an exploded perspective view showing stator blocks of a brushless motor according to Embodiment 3 of the present invention and an enlarged sectional view of Embodiment 3;
FIG. 7 illustrates a conventional brushless motor; and
FIGS. 8A and 8B illustrate, respectively, a conventional coreless brushless motor.

### Description of the Embodiments

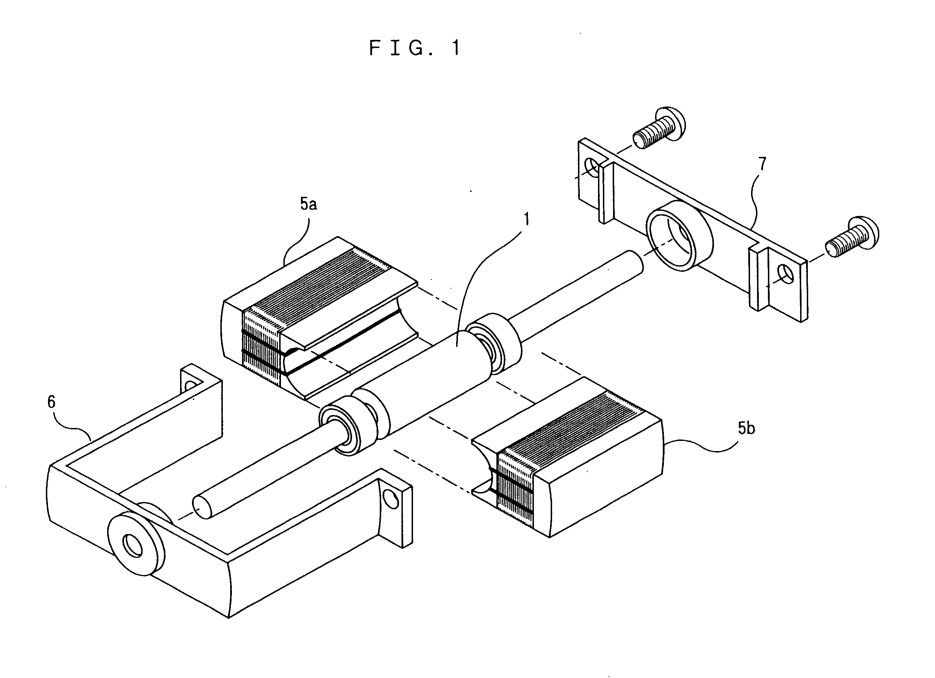

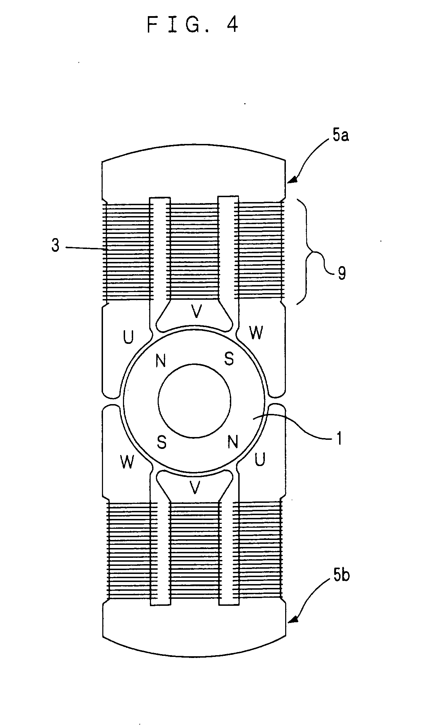

Referring to FIGS. 1 to 6, embodiments of the present invention will be described below.

### (Embodiment 1)

FIGS. 1 to 4 show Embodiment 1 of the present invention.

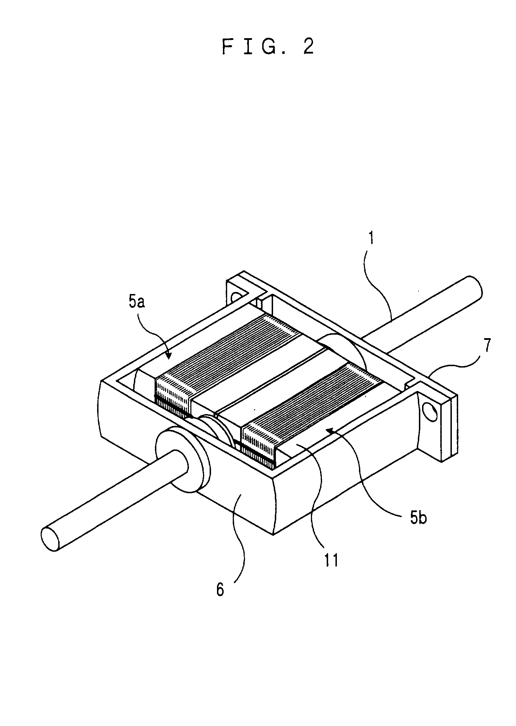

As shown in FIG. 1, a brushless motor of the present invention is configured by assembling main components including a rotor 1, substantially flat first and second stator blocks 5a and 5b, a holder main body 6, and a holder plate 7 as shown in FIG. 2.

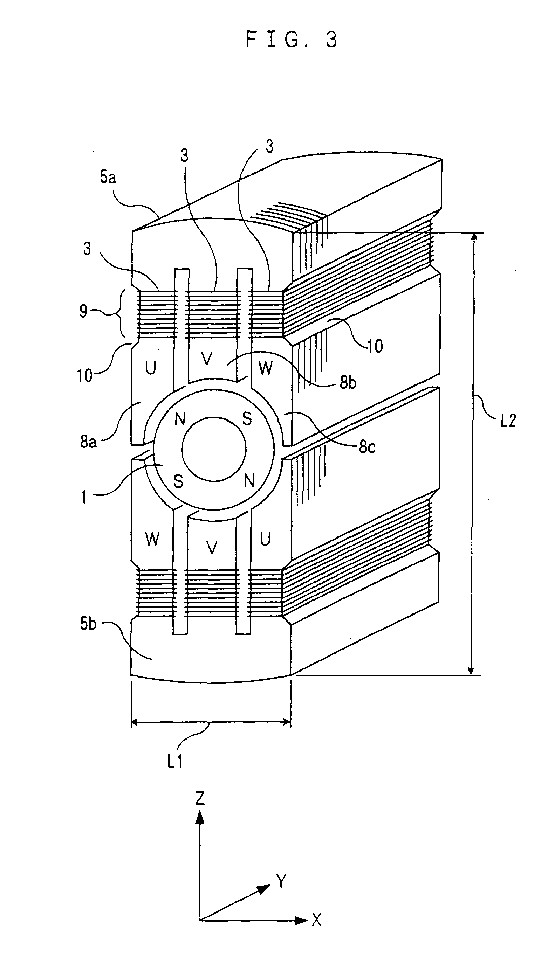

The rotor 1 is magnetized to have a plurality of polarities in a circumferential direction. As shown in FIG. 3, the first and second stator blocks 5a and 5b are each formed by stacking a plurality of magnetic steel sheets, which are stamped into substantially an E shape with three teeth of 8a, 8b, and 8c. The ends of the teeth are formed into arcs along the rim of the rotor 1. Coils 3 are wound around the teeth 8a, 8b, and 8c, and parts of the teeth around which the coils 3 are wound are referred to as teeth-winding parts 9. Winding trenches 10 are formed on the teeth-winding parts 9 of the teeth 8a and 8c.

Specifically, the ends of the teeth 8a to 8c are formed into arc surfaces opposed to the rim of the rotor with symmetrically arranged slot pitches of 60° , as shown in FIG. 3.

An electric circuit is configured such that a position of the rotor 1 is detected by a separate sensor (not shown) such as a magnetic sensor, timings of energizing the coils of phases UVW are controlled according to the position of the rotor 1 to generate a rotating magnetic field from the stators 5a and 5b, so that the rotor 1 is driven rotatively.

Thus, the stator has magnetic steel sheets stacked in an axial direction (Y direction of FIG. 3) of the rotor 1 so as to have a thickness in this direction, and the teeth 8a to 8c disposed in parallel with one another, and is formed into a flat shape along the end face of the rotor, in which a second length L2 in a direction connecting a 90° point and a 270° point (Z axis direction of FIG. 3) is longer than a first length L1 in a direction connecting a 0° point and a 180° point (X axis direction of FIG. 3). Thus, the above motor is smaller than the conventional brushless motor of FIG. 7 and achieves good magnetic efficiency because it is not coreless.

Further, when output torque is increased, the teeth-winding part 9 of the teeth 8a to 8c is extended along the Z axis direction of FIG. 3 to intensify a field magnet, or the rotor 1 and the stator blocks 5a and 5b are formed longer in the Y axis direction of FIG. 3. While a degree of freedom on design is limited to a single direction of the Y axis direction in the case of the conventional coreless motor of FIGS. 8A and 8B, the present embodiment allows a degree of freedom on design in two directions of the Y axis direction and the Z axis direction. Thus, it is possible to output necessary torque in a suitable shape according to a use.

Moreover, as described above, on side faces 11 of the first and second stator blocks 5a and 5b that intersect normally to the first length direction X, winding trenches 10 serving as teeth-winding parts 9 are formed along a thickness direction of the stator blocks (Y axis direction), and the outermost peripheral surface of the coils 3 wound around in the winding trenches 10 is flush with the side faces 11 or sunk from the side faces 11. Hence, a width in the X axis direction can be further reduced.

### (Embodiment 2)

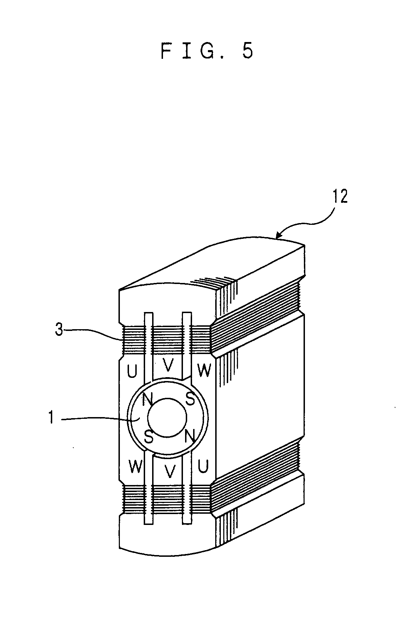

FIG. 5 shows Embodiment 2 of the present invention.

The flat stator of Embodiment 1 is composed of the first and second stator blocks 5a and 5b making contact with each other at boundary parts thereof in a direction connecting the 0° point and the 180° point and normal to the axial center. Embodiment 2 is identical to Embodiment 1 in configuration except that Embodiment 2 is composed of a single stator block 12 shown in FIG. 5.

### (Embodiment 3)

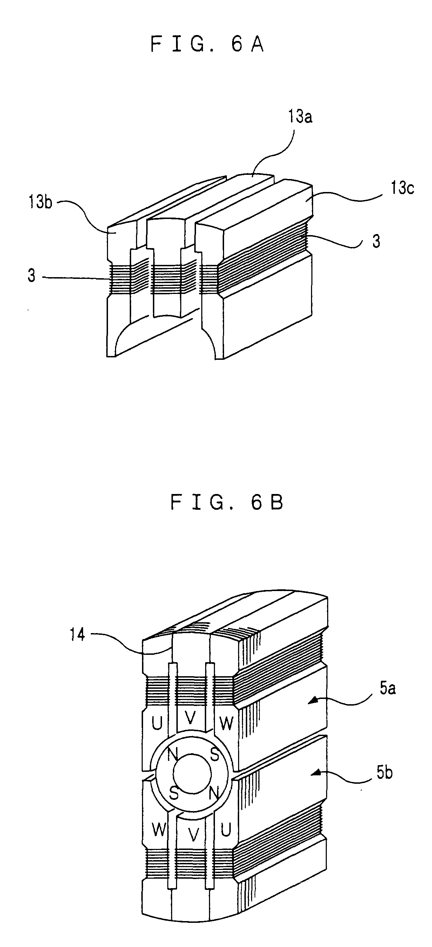

FIGS. 6A and 6B show Embodiment 3 of the present invention.

The first and second stator blocks 5a and 5b of Embodiment 1 are each composed of the three teeth 8a to 8c. The following configuration is also applicable: as shown in FIG. 6A, teeth blocks 13a, 13b, and 13c are brought into contact with one another as shown in FIG. 6B such that a magnetic path is formed at the base end part of a teeth-winding part 9, and the teeth blocks are joined at joining parts 14. Other configurations are identical to those of Embodiment 1.

In this case, coils can be readily wound around the teeth-winding parts 9.

## Claims

1. A brushless motor comprising:
a rotor (1) which is rotatively supported in an axial direction Y and is magnetized to have a plurality of polarities in a circumferential direction; and
stators (5a, 5b) composed of teeth (8a, 8b, 8c) which are wound with coils (3) in teeth-winding parts (9) thereof and which have front ends respectively facing the circumference of said rotor (1),
said rotor (1) rotating according to a rotating magnetic field of said stators,
wherein the front ends of the teeth (8a, 8b, 8c) of said stators (5a, 5b) are formed into arc surfaces along the rim of said rotor (1) and the teeth-winding parts (9) are formed in parallel with each other.

2. The brushless motor according to claim 1, wherein the stators (5a, 5b) are formed such that the arc surfaces of the front ends of the teeth (8a, 8b, 8c), which are opposed to the rim of said rotor (1), have slot pitches which are symmetrical each other with respect to the axial direction Y of said rotor.

3. The brushless motor according to claim 1 or 2, wherein said stators (5a, 5b) have a thickness in the axial direction Y of said rotor (1), and end faces of the rotor are formed such that a second length (L2) in a direction Z is longer than a first length (L1) in a direction X, said direction Z connecting a 90° point and a 270° point, said direction X connecting a 0° point and a 180° point.

4. The brushless motor according to claim 3, wherein said flat stators (5a, 5b) are each composed of a first stator block (5a) and a second stator block (5b) that make contact with each other at boundary parts in the direction X connecting the 0° point and the 180° point.

5. The brushless motor according to claim 4, wherein each of said first stator block (5a) and said second stator block (5b) is composed of a plurality of teeth blocks (13a, 13b, 13c) which are joined together to form a magnetic path at base end parts of said teeth-winding parts (9).

6. The brushless motor according to claim 3, wherein said flat stator is composed of a single stator block.

7. The brushless motor according to claim 3, wherein said flat stators are formed such that trenches (10) serving as said teeth-winding parts (9) are formed along the thickness direction Y on side faces thereof intersecting normally to the first length direction X, and an outermost peripheral surface of the coil (3) wound around in said trenches (10) is flush with said side face (11) or sunk from said side face (11).
